# EUROPÄISCHE PATENTSCHRIFT

(11) **EP 0 560 307 B1**
(45) Veröffentlichungstag und Bekanntmachung des Hinweises auf die Patenterteilung: **12.06.1996**
(21) Anmeldenummer: 93103794.9
(22) Anmeldetag: 09.03.1993
(51) Int. Cl.: E04F 17/08, F16L 5/02

(54) **Schalung**
Shuttering
Coffrage

(30) Priorität: 11.03.1992 DE 9203278 U
(43) Veröffentlichungstag der Anmeldung: 15.09.1993
(73) Patentinhaber: PECA-VERBUNDTECHNIK GMBH, D-84130 Dingolfing (DE)
(72) Erfinder: Fischer, Willibald, W-8312 Dingolfing (DE)
(74) Vertreter: Grünecker, Kinkeldey, Stockmair & Schwanhäusser Anwaltssozietät

(56) Entgegenhaltungen:
- EP-A- 0 016 335
- DE-A- 3 606 339
- FR-A- 2 357 715
- GB-A- 2 174 125

## Beschreibung

Die Erfindung bezieht sich auf eine Schalung für einen zu verfüllenden Wanddurchbruch der im Oberbegriff des Anspruchs 1 erläuterten Art.

Bisher werden zu verfüllende Wanddurchbrüche durch einfache Holzbretter verschalt. Durch derartige Wanddurchbrüche werden beispielsweise Rohre geführt, wobei anschließend der Zwischenraum zwischen den Rohren und den umlaufenden Kanten des Wanddurchbruchs wiederum mit Beton verfüllt wird, so daß die Rohre fest im Beton sitzen. Auf diese Weise ist es möglich, Rohre beispielsweise durch Wasserbauwerke zufriedenstellend dicht hindurchzuführen. Eine gute Abdichtung wird jedoch nur dann erreicht, wenn im Beton keine Hohlräume verbleiben. Dies erfordert jedoch bei der üblichen Holzschalung vermehrte Aufmerksamkeit, um den Beton so einzufüllen, daß Luftblasen vermieden werden. Um das Einfüllen zu erleichtern, wird bisher bereits das obere Schalungsbrett etwas schräg gestellt, damit eine Art Betonleitfläche vorhanden ist. Trotzdem konnten noch nicht alle Probleme gelöst werden.

Der Erfindung liegt somit die Aufgabe zugrunde, eine Schalung der genannten Art bereitzustellen, mit der Hohlräume im Beton sicher vermieden werden können.

Die Aufgabe wird durch die kennzeichnenden Merkmale des Anspruchs 1 gelöst.

Die erfindungsgemäß vorgeschlagene Schalung aus Streckmetall ist luftdurchlässig, so daß sich beim Erstellen der Wand keine Luftblasen bilden können, die nachfolgend wegen ihrer ungünstigen Lage nicht mehr verfüllt werden können. Darüber hinaus wird durch das Streckmetall eine sehr rauhe Anschlußoberfläche erzielt, in der der zum Einbetonieren der Rohre nachgeschüttete Beton sehr gut und ohne die Ausbildung von Zwischenräumen haftet. Darüber hinaus kann auch die Schräge zum Erleichtern des Einschüttens auf einfachere Weise hergestellt werden, als dies mit Schalungshölzern möglich ist.

Gleichzeitig kann auch gemäß Anspruch 2 eine Verzahnungsnut wesentlich besser hergestellt werden.

Mit dem Rahmen kann gemäß Anspruch 3 eine Aussteifung verbunden werden, die sich gemäß Anspruch 4 rund um den Rahmen umlaufend erstreckt.

Durch die Anordnung der Aussteifung in der Verzahnungsnut gemäß Anspruch 5 wird einerseits eine verbesserte Lagesicherung der Aussteifung und andererseits eine noch bessere Versteifungswirkung erzielt.

Die Versteifungswirkung wird durch die in Anspruch 6 angegebene Ausgestaltung der Schalungswände weiter erhöht.

Durch die Ausgestaltung gemäß Anspruch 7 wird die Einbindung der verlorenen Schalung in das Bauwerk verbessert und die aus Metall bestehenden Schalungswände gegen Korrosion geschützt.

Ein Ausführungsbeispiel der Erfindung wird nachfolgend anhand der Zeichnungen näher erläutert. Es zeigen:
- Fig. 1: eine schematische, perspektivische Darstellung des erfindungsgemäßen Schalungsrahmens, und
- Fig. 2: einen Längsschnitt durch einen in einem Wanddruchbruch eingebauten Schalungsrahmen.

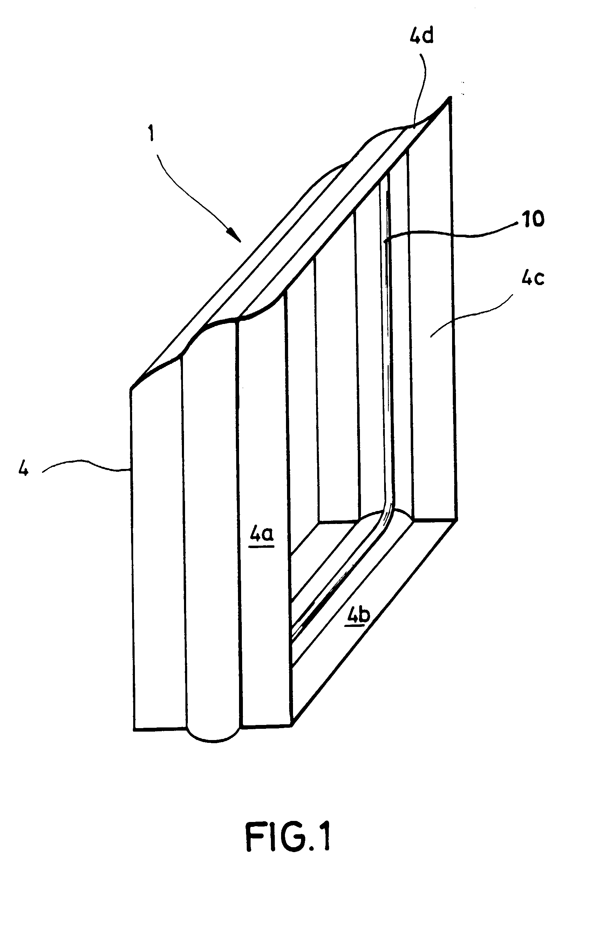

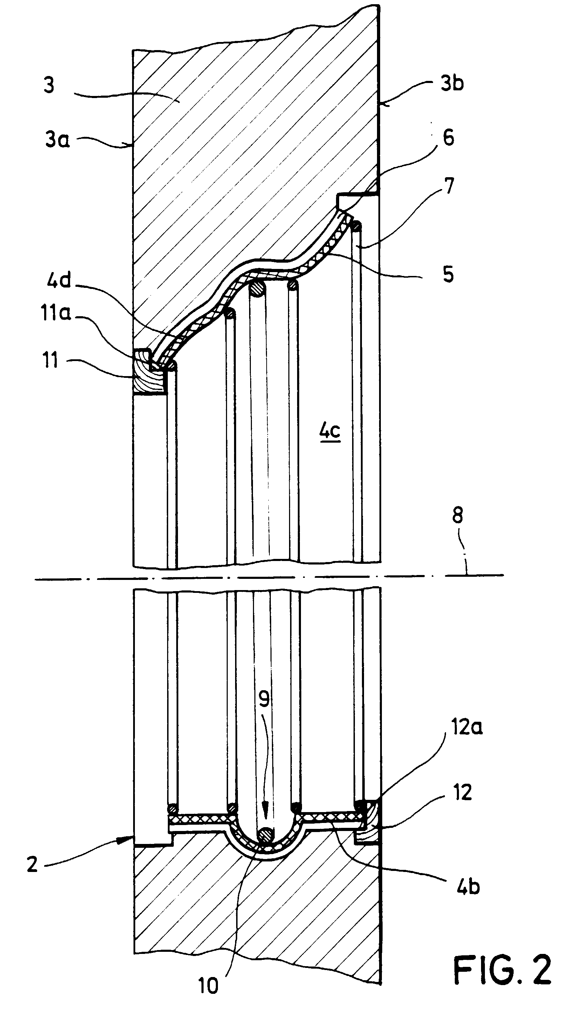

Aus den Fig. 1 und 2 ist eine Schalung 1 für einen zu verfüllenden Durchbruch 2 in einer Wand 3 ersichtlich. Die Schalung 1 umfaßt einen viereckigen Schalungsrahmen 4 als verlorene Schalung, der aus vier Schalungstafeln 4a, 4b, 4c und 4d zusammengesetzt ist. Jede der Schalungstafeln 4a, 4b, 4c, 4d besteht aus Streckmetall 5, auf das gitterartig Metallstäbe 6 und 7 aufgeschweißt sind. Dabei sind die Längsstäbe 6 an der Außenseite des Streckmetalls 5 und die Querstäbe 7 an seiner Innenseite angeschweißt.

Drei der vier Schalungstafeln 4a, 4b und 4c sind im wesentlichen parallel zur Achse 8 des Rahmens 4 angeordnet, die mit der Achse des Durchbruchs 2 zusammenfällt. Die vierte, obere Schalungstafel 4d ist zum Ausbilden einer Schüttgasse gegenüber der Achse 8 geneigt, und zwar von oben außen nach innen unten, in einer Richtung, in der später der Beton eingefüllt werden muß, um die durch den Durchbruch 2 hindurchgeführten, nicht gezeichneten Rohre einzubetonieren. Die obere Schalungstafel 4d kann dabei, wie gezeigt, leicht geschwungen sein.

Um alle Schalungstafeln 4a bis 4d umlaufend ist eine Verzahnungsnut 9 eingeformt, die am Rahmen 4 in Richtung der Wand 3 vorsteht. In dieser Verzahnungsnut ist ein Aussteifungsring in Form eines umlaufenden Metallstabes 10 eingeschweißt.

Der Schalungsrahmen 4 ist etwas schmaler als die Dicke der Wand 3, so daß die beiden Ränder des Schalungsrahmens 4 gegenüber den beidseitigen Oberflächen 3a und 3d der Wand 3 zurückversetzt sind. Den Zwischenraum füllt jeweils eine rahmenartige Betondeckungsleiste 11 bzw. 12 aus, die in Fig. 2 aus Gründen der Übersichtlichkeit nur in der linken oberen und rechten unteren Ecke gezeigt sind. Tatsächlich verläuft die Betondeckungsleiste 11, 12 um den gesamten Rahmen 4. Jede Betondeckungsleiste 11, 12 ist mit jeweils einer umlaufenden Aussparung 11a bzw. 12a an einer Ecke versehen, in der jeweils eine freie Kante des Rahmens 4 derart aufgenommen ist, daß nach dem Entfernen der Betondeckungsleisten 11, 12 die freien Kanten des Rahmens 4 zum Verfüllen mit Beton freiliegen, wie dies in Fig. 2 in der linken unteren und rechten oberen Ecke gezeigt ist.

Zum Herstellen der mit dem Durchbruch 2 versehenen Wand 3 wird zunächst der Rahmen 4 aus den mit der Verzahnungsnut versehenen Schalungstafeln zusammengeschweißt. Anschließend wird der Metallstab 9 zum Aussteifen eingelegt und gegebenenfalls festgeschweißt. Dann wird in üblicher Weise eine flächige Schalung für die Wand 3 erstellt, wobei an der Stelle des Durchbruchs 2 der Rahmen 4 mit den rahmenförmigen Betondeckungsleisten 11 und 12 eingebaut wird. Die größte Öffnung des Rahmens weist dabei zu derjenigen Seite, von der aus der Durchbruch 2 später verfüllt werden soll.

Dann wird die Wand 3 vergossen, wobei der Beton wie üblich von oben her eingeschüttet wird. Durch das luftdurchlässige Streckmetall kann die Luft auch unterhalb des Rahmens 4 vollständig entweichen, so daß keine durch Luftblasen verursachten Hohlräume verbleiben. Trotzdem sind die Öffnungen im Streckmetall nicht so groß, daß Beton in nennenswertem Umfang hindurchtritt. Ein leichter Durchtritt von Beton durch die Öffnungen im Streckmetall ist erwünscht, da dieser eine rauhe und somit haftfähige Anschlußoberfläche bildet. Nach dem Vergießen der Wand 3 wird ausgeschalt, wobei gleichzeitig mit den Wandschalungen auch die Betondeckungsleisten 11 und 12 entfernt werden. Dann werden die einzubetonierenden Rohre durch den Durchbruch 2 geführt und fixiert. Anschließend wird der Durchbruch 2 durch Einschütten von Beton entlang der durch die obere Schalungstafel 4d bestimmten Neigung verfüllt. Durch die Neigung der Schalungstafel 4d wird wiederum verhindert, daß an schwer zugänglichen Stellen Luftblasen verbleiben. Gleichzeitig werden die freien Kanten des Schalungsrahmens 4 von Beton umschlossen, wobei sich die Anschlußfläche zwischen nacheinander vergossenen Bauteilen, die anfällig gegen das Einsickern von Wasser ist, aus der direkten Verlängerung der Schalungstafeln nach außen verlagert, so daß die Gefahr von Korrosion herabgesetzt wird.

In Abwandlung des beschriebenen und gezeichneten Ausführungsbeispieles kann der Rahmen jeden anderen gewünschten Querschnitt aufweisen. Bedingt durch die Biegbarkeit des verwendeten, durch Metallstäbe versteiften Streckmetalls können Verzahnungsnuten in gewünschter Anzahl vorgesehen werden.

## Patentansprüche

1. Schalung für einen zu verfüllenden Wanddurchbruch (2), **gekennzeichnet durch** ihre Ausbildung als verlorene Schalung aus einem vorgefertigten, ringförmigen um eine Achse (8) geschlossenen Rahmen (4) aus Schalungstafeln (4a, 4b, 4c, 4d), die aus einem durch aufgeschweißte Metallstäbe (6, 7) verstärkten Streckmetall (5) bestehen, wobei die im eingebauten Zustand obenliegende Schalungstafel (4d) in Richtung auf die Achse (8) geneigt ist.

2. Schalung nach Anspruch 1, **gekennzeichnet durch** eine in die Schalungstafel (4a - 4d) eingeformten Verzahnungsnut (9).

3. Schalung nach einem der Ansprüche 1 oder 2, **dadurch gekennzeichnet,** daß der Rahmen (4) eine mit den Schalungstafeln (4a - 4d) verbundene Aussteifung (10) enthält.

4. Schalung nach Anspruch 3, **dadurch gekennzeichnet,** daß sich die Aussteifung (10) umlaufend über alle Schalungstafeln (4a - 4d) erstreckt.

5. Schalung nach Anspruch 3 oder 4, **dadurch gekennzeichnet,** daß die Aussteifung (10) in der Verzahnungsnut (9) angeordnet ist.

6. Schalung nach einem der Ansprüche 1 bis 5, **dadurch gekennzeichnet,** daß die Metallstäbe (6, 7) gitterartig mit dem Streckmetall (5) verschweißt sind, wobei die jeweils in Querrichtung verlaufenden Metallstäbe (7) auf einer Seite und die in Längsrichtung verlaufenden Metallstäbe (6) auf der anderen Seite des Streckmetalls (5) angeordnet sind.

7. Schalung nach einem der Ansprüche 1 bis 6, **dadurch gekennzeichnet,** daß wenigstens eine freie Kante der Schalungstafel (4a - 4d) des Rahmens (4) mit einer Betondeckungsleiste (11, 12) versehen ist, wobei die Betondeckungsleiste (11, 12) eine Aussparung (11a, 12a) zur Aufnahme der freien Kante aufweist.

## Claims

1. Shuttering for a wall breach (2) to be filled, **characterized by** its design as a disposable shuttering formed by a prefabricated closed frame (4) extending around an axis (8), which comprises shuttering boards (4a, 4b, 4c, 4d) made of an expanded metal (5) stiffened by welded-on metal rods (6, 7), the shuttering board (4d) situated at the top in the installed state being inclined towards the axis (8).

2. Shuttering according to claim 1, **characterized by** a key groove (9) formed into the shuttering board (4a - 4d).

3. Shuttering according to one of claims 1 or 2, **characterized in that** the frame (4) includes a stiffener (10) connected to the shuttering boards (4a - 4d).

4. Shuttering according to claim 3, **characterized in that** the stiffener (10) extends peripherally over all of the shuttering boards (4a - 4d).

5. Shuttering according to claim 3 or 4, **characterized in that** the stiffener (10) is disposed in the key groove (9).

6. Shuttering according to one of claims 1 to 5, **characterized in that** the metal rods (6, 7) are welded in the manner of a grid to the expanded metal (5), the transversely extending metal rods (7) being disposed on one side and the longitudinally extending metal rods (6) being disposed on the other side of the expanded metal (5).

7. Shuttering according to one of claims 1 to 6, **characterized in that** at least one free edge of the shuttering board (4a - 4d) of the frame (4) is provided with a concrete cover strip (11, 12), the concrete cover strip (11, 12) having a recess (11a, 12a) for receiving the free edge.

## Revendications

1. Coffrage pour une traversée de paroi (2) à combler, caractérisé par sa constitution sous forme de coffrage perdu à partir d'un cadre (4) préfabriqué de panneaux de coffrage (4a, 4b, 4c, 4d), de forme annulaire, fermé autour d'un axe (8), les panneaux de coffrage étant composés d'un profilé métallique (5) renforcé par des barres métalliques (6, 7) soudées, et le panneau de coffrage (4d) situé en haut dans l'état de montage étant incliné par rapport à la direction de l'axe (8).

2. Coffrage selon la revendication 1, caractérisé par une rainure d'endentement (9) formée dans le panneau de coffrage (4a - 4d).

3. Coffrage selon l'une des revendications 1 ou 2, caractérisé en ce que le cadre (4) comporte un renfort (10) relié aux panneaux de coffrage (4a - 4d).

4. Coffrage selon la revendication 3, caractérisé en ce que le renfort (10) s'étend de façon périphérique au-dessus de tous les panneaux de coffrage (4a - 4d).

5. Coffrage selon la revendication 3 ou 4, caractérisé en ce que le renfort (10) est disposé dans la rainure d'endentement (9).

6. Coffrage selon l'une des revendications 1 à 5, caractérisé en ce que les barres métalliques (6, 7) sont soudées en treillis avec le profilé métallique (5), les barres métalliques (7) placées dans la direction transversale étant disposées sur un côté du profilé métallique (5) et les barres métalliques (6) placées dans la direction longitudinale étant disposées sur l'autre côté du profilé métallique (5).

7. Coffrage selon l'une des revendications 1 à 6, caractérisé en ce que au moins une arête libre du panneau de coffrage (4a - 4d) du cadre (4) est munie d'une barrette de recouvrement du béton (11, 12), la barrette de recouvrement du béton (11, 12) présentant un évidement (11a, 12a) destiné à loger l'arête libre.
